# EUROPÄISCHE PATENTANMELDUNG

(11) **EP 0 866 288 A2**
(43) Veröffentlichungstag der Anmeldung: **23.09.1998**
(21) Anmeldenummer: 98104831.7
(22) Anmeldetag: 17.03.1998
(51) Int. Cl.: F24J 2/46, F24J 2/04

(54) **Anschlusseinrichtung zur Anbringung von wärmetransportmediumdurchströmten Flach-Sonnenkollektoren auf Dächern**

(30) Priorität: 18.03.1997 DE 19711323
(71) Anmelder: thermosolar TSI AG, 8048 Zürich (CH)
(72) Erfinder: Kellner, Bernd, 93161 Eilsbrunn-Sinzing (DE)
(74) Vertreter: WILHELMS, KILIAN & PARTNER Patentanwälte

(57) **Zusammenfassung**

Gegenstand der Erfindung ist eine Anschlußeinrichtung zur Anbringung von wärmetransportmediumdurchströmten Flach-Sonnenkollektoren (1) auf Dächern, wobei die Sonnenkollektoren einen Vorlauf- (2) und Rücklaufanschluß (3) an dem bei der Montage auf dem Dach oberen Rand des Kollektors aufweisen, bei welcher die Anschlußeinrichtung als langgestreckter kastenartiger Modul (4) ausgebildet ist, in welchem eine Sammelvorlaufleitung mit bei auf dem Dach montiertem Modul nebeneinander liegenden Anschlüssen für jeweils einen Wärmetransportmediumeinlaß eines Kollektors, eine Sammelrücklaufleitung mit bei auf dem Dach montiertem Modul nebeneinanderliegenden Anschlüssen für jeweils einen Wärmetransportmediumauslaß eines Kollektors sowie eine die Sammelrücklaufleitung fortsetzende Rücklaufleitung nebeneinander verlaufen, wobei die Lage der Anschlüsse für die Kollektoren räumlich der Lage der Anschlüsse mehrerer nebeneinanderliegender Kollektoren der Art, für deren Anschluß der Modul vorgesehen ist, entspricht.

## Beschreibung

Die Erfindung betrifft eine Anschlußeinrichtung zur Anbringung von wärmetransportmediumdurchströmten Flach-Sonnenkollektoren auf Dächern.

Die Fig. 5(a), (b) und (c) zeigen heute übliche Montageweisen eines Satzes von Flach-Sonnenkollektoren auf einem Dach. Die Anschlüsse, mit denen benachbarte Kollektoren verbunden werden, liegen zwischen den Kollektoren. Dies beabstandet die Kollektoren unnötig, und außerdem unterliegen solche Anschlüsse einer Biegebeanspruchung, wenn sich beispielsweise das Dach an einer bestimmten Stelle senkt.

Aufgabe der Erfindung ist es, die Montage von Sonnenkollektoren auf Dächern zu vereinfachen und zu verbessern.

Zur Lösung dieser Aufgabe ist die Erfindung, wie in den Patentansprüchen gekennzeichnet.

Ausführungsformen der Erfindung werden nun anhand der beigefügten Zeichnungen beschrieben. Es zeigt bzw. zeigen
Fig. 1(a) bis (c) Anschlußvarianten von Sonnenkollektoren mit Anschluß des Anschlußkastens an den Wärmemediumkreislauf am linken Ende, am rechten Ende bzw. in der Mitte,
Fig. 2 Anschlußteile, mit denen ein Kollektor am Anschlußkasten angebracht wird,
Fig. 4(a) und (b) Stellungen des kollektorseitigen Verbindungsteils aus Fig. 2 für zwei unterschiedliche Höhenlagen des Absorbers in der Kollektorwanne, und
Fig. 5(a) bis (c) Varianten herkömmlicher Montageweisen von Dachkollektoren.

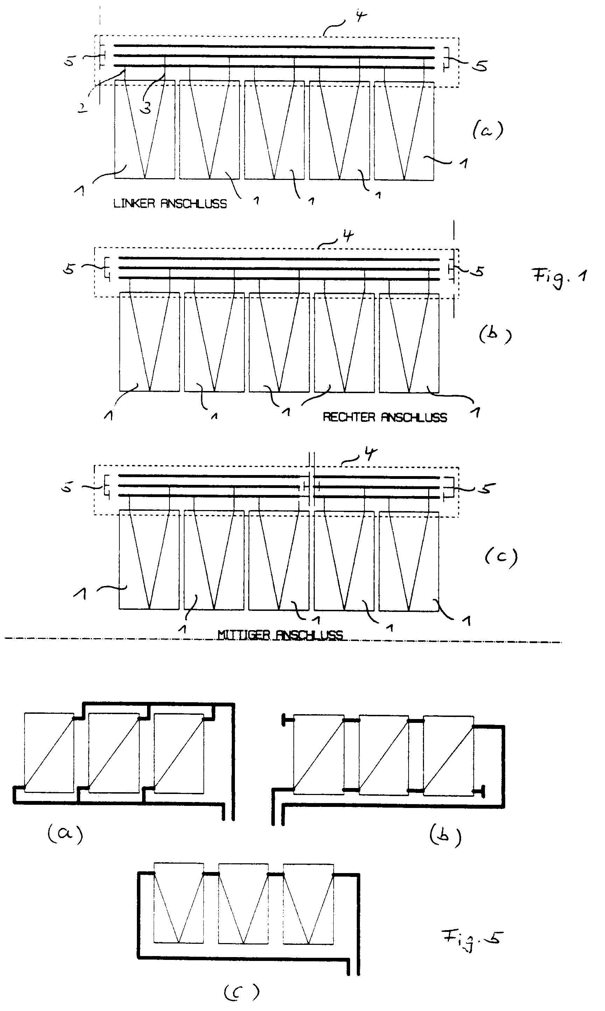

Gemäß den Fig. 1(a) bis (c) sind nebeneinander angeordnete Flach-Sonnenkollektoren 1 an ihren freiliegenden Oberkanten mit Vorlauf 2 und Rücklauf 3 an einen modulartig aufgebauten Anschlußkasten 4 angeschlossen, der im wesentlichen drei Rohre enthält, die durch Verbindungsstücke an den Enden entsprechend zusammengeschaltet sind.

In Fig. 1(a) tritt das Wärmetransportmedium, also in der Regel Wasser, am linken Ende in die unterste Rohrleitung ein, an die parallel die Vorläufe 2 der nebeneinanderliegenden Kollektoren 1 angeschlossen sind. Dieses Rohr stellt also die Vorlaufsammelleitung dar. Am rechten Ende ist die Vorlaufsammelleitung mittels eines in entsprechender Weise ausgebildeten Verbindungsstücks 5 abgeschlossen.

Die Rückläufe münden parallel in die mittlere Rohrleitung ein, die die Rücklaufsammelleitung bildet und linksseitig durch das dort befindliche Verbindungsstück 5 abgeschlossen ist, während sie auf der rechten Seite durch das dort vorgesehene Verbindungsstück 5 mit einer nachgeschalteten obersten Rohrleitung verbunden ist, die die eigentliche Rücklaufleitung darstellt und über die am linksseitigen Ende das Wärmetransportmedium abgeführt wird. Diese dritte Rohrleitung ist erforderlich, um in allen parallel geschalteten Kollektoren einen annähernd gleichen Druckverlust und damit eine annähernd gleiche Strömungsrate zu erzielen.

Die Verhältnisse in Fig. 1(b) ergeben sich aus denjenigen der Fig. 1(a) durch Vertauschen von rechts und links.

Fig. 1(c) zeigt einen Fall, bei dem sich der Anschluß des Rohrkastens an den Kreislauf zwischen den Enden befindet. Das Wärmetransportmedium strömt von der Anschlußstelle nach beiden Richtungen in die Vorlaufsammelleitung des Rohrkastens, wird nach Durchlaufen der Kollektoren im mittleren Rohr, der Rücklaufsammelleitung, zu beiden Enden geleitet und von dort über entsprechende Verbindungsstücke 5 an beiden Enden in das dritte Rohr, die Rücklaufleitung, zu dem zwischen den Rohrenden liegenden Abschluß zurück.

Im Anschlußkasten ist auch die nötige thermische Isolierung für die Rohrleitungen vorgesehen. Der Rohrkasten stellt ein modulartig vorgefertigtes Bauteil dar, mit dem das außerhalb der Kollektoren notwendige Rohrleitungssystem standardisiert am Dach installiert werden kann.

Der Anschlußkasten wird hierzu beispielsweise mit vier Dachhaken einfach am Dach angebracht.

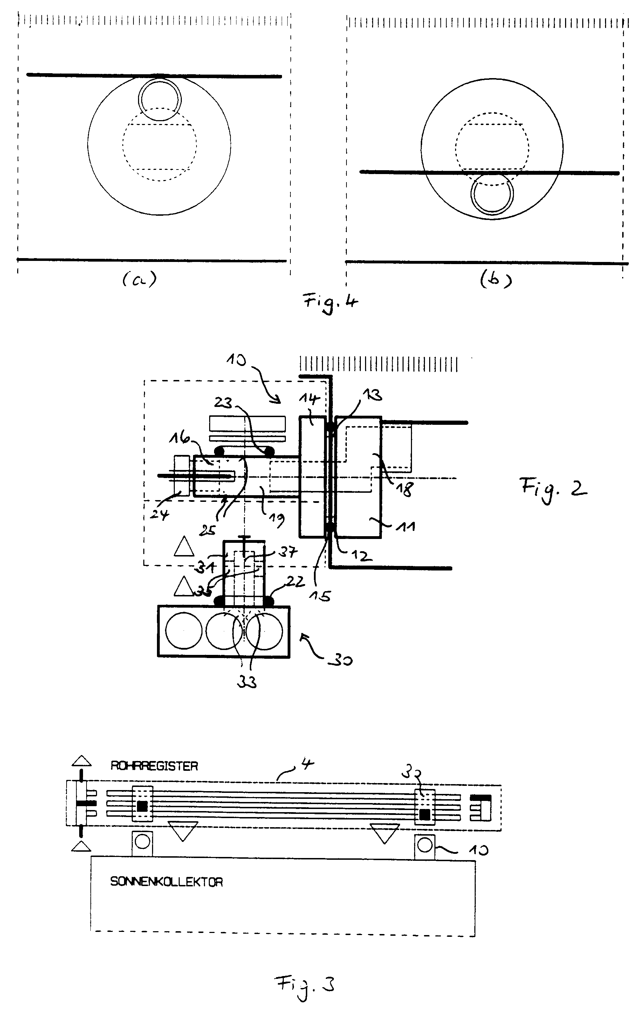

Die Anschlußteile, mit denen die Rohrleitungen des Rohrkastens mit denjenigen der Kollektoren verbunden werden, sind in Fig. 2 gezeigt. Fig. 2 deutet eine Kollektorwanne 6 mit einer darauf befindlichen Abdeckscheibe 7 an, in der sich ein ebenfalls schematisch dargestellter Absorber 8 erstreckt, unter dem und in thermischer Verbindung mit ihm die Verrohrung für das Wärmetransportmedium im Kollektor verläuft.

Die mit 10 bezeichnete Gehäusedurchführung für die Verrohrung durchsetzt die Seitenwand der Kollektorwanne 6 in eine im wesentlichen zylindrischen Bohrung und weist kollektorinnenseitig einen Flansch 11 auf, mit dem die Durchführung über eine Dichtung 12 an der Kollektorwand anliegt. An den Flansch 11 schließt sich nach außen ein mit einem Außengewinde versehener Schaft 13 an, auf den auf der Außenseite der Kollektorwanne 6 eine Mutter 14, unter Zwischenlage eines weiteren Dichtungsrings 15 geschraubt ist.

Flansch 11 und Gewindeschaft 13 werden von einem Strömungskanal 18 durchsetzt, wobei sich der Gewindeschaft 13 nach außen in einem Ansatz 16 fortsetzt, in dem der Strömungskanal weiterverläuft.

Der Ansatz 16 wird quer zu seiner Achse von einer durch den Strömungskanal gehenden Querbohrung 19 durchsetzt, in den ein Anschlußzapfen 31 eines später noch im einzelnen beschriebenen rohrkastenseitigen Anschlußstücks 30 einführbar ist.

Die Querbohrung ist an ihren äußeren Mündungen von planen Dichtflachen 25 umgeben, gegen die sich den Anschlußzapfen umgebende Dichtringe 22 und 23 legen können, mit denen die Querbohrung 19 mit darin befindlichem Anschlußstutzen 31 durch Quetschverschraubung nach außen abgedichtet wird.

Der Strömungskanal 18 verläuft im Anschlußstück 10 so, daß er im Flansch 11 exzentrisch mündet.

Bei der in Fig. 2 dargestellten Stellung wird der Absorber 8 hochliegend angeschlossen, was bei nicht-evakuierten Kollektoren günstig ist. Bei einer Drehung der Durchführung um 180° liegt der Absorber tief, was bei evakuierten Kollektoren günstiger ist. Diese beiden Stellungen sind in Fig. 4(a) und (b) gezeigt.

Der Ansatz 16 kann, statt mit dem Gewindeschaft einstückig zu sein, auch gesteckt sein. Hierzu wird der Ansatz 16 im Bereich seines kollektorseitigen Endes mit einer Nut zu Aufnahme eines Sicherungsrings versehen. Der Sicherungsring und damit der Ansatz 16 wird mit eine auf dem Gewindeschaft 13 schraubbaren weiteren Überwurfmutter in Richtung Gewindeschaft gedrückt und so befestigt. Ein mitgequetschter, den Ansatz umgebender Dichtring sorgt für Abdichtung. Der gesteckte Ansatz ist gegenüber den übrigen Teilen der Durchführung verdrehbar, was auch andere Verdrehwinkel der Durchführung als die oben genannten 180° ermöglicht.

24 stellt eine in den Strömungskanal der Durchführung 10 geführte Temperatursonde dar.

Die Anbringung des rohrkastenseitigen Anschlußteils 30 an der im Rohrkasten befindlichen Gruppe von Vorlaufsammelleitung, Rücklaufsammelleitung und Rücklaufleitung ist am besten aus Fig. 2 und 3 ersichtlich. Das Anschlußteil 30 weist drei nebeneinanderliegende Bohrungen 32 auf, die von den drei oben genannten Leitungen im Rohrkasten 4 durchsetzt werden. Entweder die Bohrung für die Vorlaufleitung oder die Bohrung für die Rücklaufleitung ist mit dem als Sackbohrung 37 ausgeführten Inneren des senkrecht zu den Rohrleitungen abragenden Zapfens 31 verbunden. Der Mantel des Zapfens wird von einer in die Sackbohrung führenden, quer zu dieser verlaufenden Bohrung 35 durchsetzt. Über diese steht bei Anschluß an die Durchführung 10 der Strömungskanal 18 mit der Sackbohrung in Verbindung. In Fig. 2 ist sowohl eine Verbindung 33 der Sackbohrung 37 zur mittleren Bohrung 32 für die Vorlaufleitung als auch eine Verbindung zur rechten Bohrung 32 für die Vorlaufleitung angedeutet. Im konkreten Fall ist immer nur eine der beiden Verbindungen vorhanden. Ein durch eine Bohrung 32 hindurchgehendes Rohr ist natürlich an der Verbindung 33 offen, damit eine Strömungsverbindung hergestellt wird.

Ein Kollektor wird gleichsam standardisiert am Rohrkasten 4 angebracht, indem er mit der Querbohrung 19 der Durchführung 10 an dem Zapfen 31 eingehängt wird. Der Zapfen 31 weist an seinem äußeren Ende ein Gewinde auf, auf das eine Mutter 25 unter Pressung der den Querkanal umgebenden Dichtringe 22, 23 geschraubt wird. Eine flüssigkeitsdichte Verbindung von Kollektiv und Anschlußkasten ist damit hergestellt.

## Patentansprüche

1. Anschlußeinrichtung zur Anbringung von wärmetransportmediumdurchströmten Flach-Sonnenkollektoren auf Dächern, wobei die Sonnenkollektoren einen Vorlauf- und Rücklaufanschluß an dem bei der Montage auf dem Dach oberen Rand des Kollektors aufweisen, dadurch gekennzeichnet, daß die Anschlußeinrichtung als langgestreckter kastenartiger Modul ausgebildet ist, in welchem eine Sammelvorlaufleitung mit bei auf dem Dach montiertem Modul nebeneinander liegenden Anschlüssen für jeweils einen Wärmetransportmediumeinlaß eines Kollektors, eine Sammelrücklaufleitung mit bei auf dem Dach montiertem Modul nebeneinanderliegenden Anschlüssen für jeweils einen Wärmetransportmediumauslaß eines Kollektors sowie eine die Sammelrücklaufleitung fortsetzende Rücklaufleitung nebeneinander verlaufen, wobei die Lage der Anschlüsse für die Kollektoren räumlich der Lage der Anschlüsse mehrerer nebeneinanderliegender Kollektoren der Art, für deren Anschluß der Modul vorgesehen ist, entspricht.

2. Einrichtung nach Anspruch 1, dadurch gekennzeichnet, daß die Anschlüsse des Moduls für die Kollektoren als Zapfen (31) ausgebildete Ein- bzw. Auslässe aufweisen, an welchen die Einlaß- und Auslaßanschlüsse der Kollektoren einhängbar sind.

3. Wärmetransportmediumanschluß eines Flach-Sonnenkollektors zur Verbindung mit den Kollektoranschlüssen eines Moduls nach Anspruch 2, gekennzeichnet durch einen durch die Kollektorwann führbaren Gewindeschaft (13), der kollektorinnenseitig durch einen Flansch (11) abgeschlossen ist, einem den Gewindeschaft kollektoraußenseitig fortsetzenden Ansatz (16), wobei Ansatz, Gewindeschaft und Flansch von einem Strömungskanal (18) durchsetzt werden, wobei der Ansatz eine durch den Strömungskanal (18) verlaufende Querbohrung (19) aufweist, mit dem der Wärmetransportmediumanschluß an einem als Zapfen ausgebildeten Ein- bzw. Auslaß des Moduls einhängbar ist.

4. Wärmetransportmediumanschluß nach Anspruch 3, dadurch gekennzeichnet, daß der Strömungskanal (18) kollektorinnenseitig exzentrisch mündet.
